Europäisches Patentamt

European Patent Office

Office européen des brevets

(11) Publication number: **0 117 357**
**A2**

# EUROPEAN PATENT APPLICATION

(21) Application number: **83307585.6**

(22) Date of filing: **13.12.83**

(51) Int. Cl.³: **H 04 K 1/06**

(30) Priority: **27.12.82 JP 230601/82**

(43) Date of publication of application: **05.09.84**
**Bulletin 84/36**

(84) Designated Contracting States: **DE FR GB NL**

(71) Applicant: **SONY CORPORATION,**
**7-35 Kitashinagawa 6-Chome Shinagawa-ku,**
**Tokyo 141 (JP)**

(72) Inventor: **Sugita, Takehiro c/o Patent Division, Sony**
**Corporation 7-35 Kitashinagawa-6, Shinagawa-ku Tokyo**
**(JP)**
Inventor: **Sakamoto, Akira c/o Patent Division, Sony**
**Corporation 7-35 Kitashinagawa-6, Shinagawa-ku Tokyo**
**(JP)**
Inventor: **Fukami, Takeshi c/o Patent Division, Sony**
**Corporation 7-35 Kitashinagawa-6, Shinagawa-ku Tokyo**
**(JP)**
Inventor: **Komatsubara, Michimasa c/o Patent Division,**
**Sony Corporation 7-35 Kitashinagawa-6, Shinagawa-ku**
**Tokyo (JP)**
Inventor: **Shimizu, Akira c/o Patent Division, Sony**
**Corporation 7-35 Kitashinagawa-6, Shinagawa-ku Tokyo**
**(JP)**

(74) Representative: **Thomas, Christopher Hugo et al, D**
**Young & Co 10 Staple Inn, London WC1V 7RD (GB)**

(54) Digital signal composing circuits.

(57) A digital signal composing circuit includes a first selector (7) for selecting a plurality of digital data, a second selector (6) for selecting one of the digital data and a feedback signal, a control circuit (14) for controlling the switching of the first and second selectors (7, 6) and an adding circuit (8) for adding outputs of the first and second selectors (7, 6) and supplying the added output to the second selector (6) as the feedback signal wherein the final output is derived from the adding circuit (8).

DIGITAL SIGNAL COMPOSING CIRCUITS

This invention relates to digital signal composing circuits. Such circuits can, for example, be used for smoothly connecting or mixing a plurality of digital information signals.

In one form of scrambling system for audio frequency signals, an audio signal is divided into blocks, each block being formed of a plurality of segments, the plurality of segments are re-arranged on a time-base in a predetermined order within every block, and on reception after passing over a transmission path, these segments are re-arranged in the original order to restore the original audio signal. If the transmission path includes a device such as a video tape recorder having a time-base fluctuation, then when these segments are re-arranged at the receiving side, the ends of the segments are displaced so that the original audio signal is distorted or a noise is superimposed on the original audio signal.

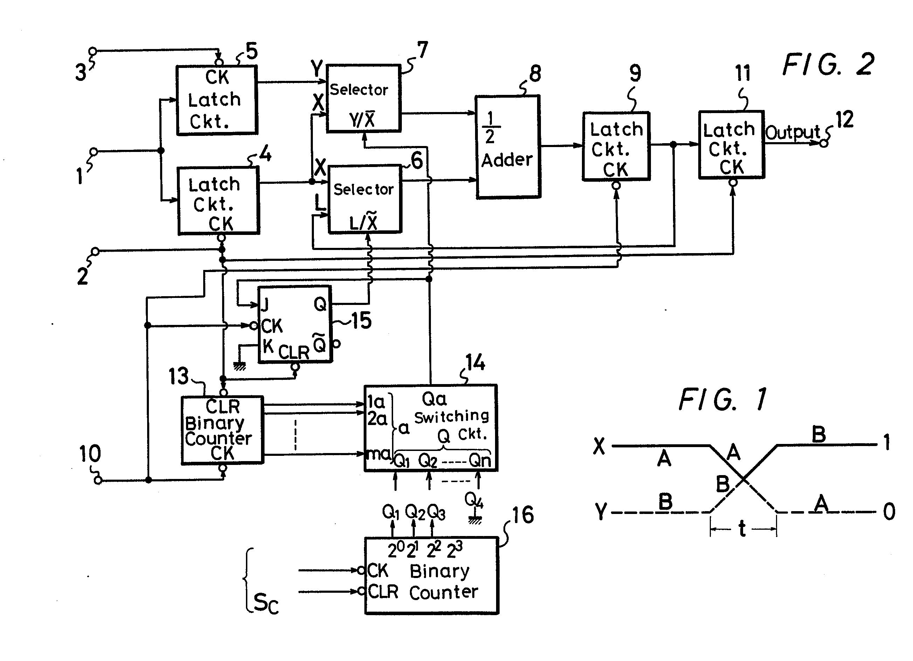

Therefore, as a method for solving the above problem, there has been proposed a so-called cross-fade signal processing system in which as, for example, shown in Figure 1 of the accompanying drawings. When digital data X and Y having different contents A and B are to be connected to each other, near the connection point, the digital data X are gradually decreased in level, while the other digital data Y are gradually increased in level over a predetermined interval (referred to as the cross-fade period) so as to connect the data with each other smoothly.

However, a conventional cross-fade signal processing circuit requires a multiplier to apply the cross-fade, so the circuit becomes large in structure. Particularly when this circuit is to be formed as an integrated circuit, the manufacturing cost therefore becomes high.

According to the present invention there is provided a digital signal composing circuit characterised by:

a first selecting circuit for selecting a plurality of digital data;

a second selecting circuit for selecting one of said digital data and a feedback signal;

a control circuit for controlling the switching of said first and second selecting circuits; and

an adder for adding outputs of said first and second selecting circuits and supplying said added output to said second selecting circuit as said feedback signal, whereby a final output is derived from said adder.

The invention will now be described by way of example with reference to the accompanying drawings, throughout which like parts are referred to by like references, and in which:

Figures 1 is a diagram for explaining a so-called cross-fade signal process;

Figure 2 is a block diagram showing an embodiment of digital signal composing circuit according to the present invention; and

Figures 3A to 3P (formed of Figure 3A-I and 3A-II to Figures 3P-I and 3P-II) are signal waveform diagrams used to explain the operation of the digital signal composing circuit of Figure 2.

Before describing the embodiment, the principle thereof will briefly be described. In the embodiment, a weighted mean value of two digital data X and Y is calculated as:

$$Z = (K/2^n)X + (1-K/2^n)Y \qquad ...(1)$$

where K is a constant and n is an arbitrary integer. A signal processor which can satisfy equation (1) does not need a multiplier but can be formed using an adder and selectors as described later.

When, now, n is taken as 3, equation (1) is expanded as follows:

$$
\begin{aligned}
7X/8 + Y/8 &= 1/2(X + 1/2(X + 1/2(Y + X))) \\
6X/8 + 2Y/8 &= 1/2(X + 1/2(Y + X)) \\
5X/8 + 3Y/8 &= 1/2(X + 1/2(Y + 1/2(Y + X))) \\
4X/8 + 4Y/8 &= 1/2(Y + X) \qquad\qquad ...(2) \\
3X/8 + 5Y/8 &= 1/2(Y + 1/2(X + 1/2(Y + X))) \\
2X/8 + 6Y/8 &= 1/2(Y + 1/2(Y + X)) \\
1X/8 + 7Y/8 &= 1/2(Y + 1/2(Y + 1/2(Y + X)))
\end{aligned}
$$

As seen in the above, equation (1) can be calculated using addition and shifting of the data by one binary place to achieve the multiplication by 1/2. In the case where n is selected as some other integer, equation (1) can be expanded similarly.

The calculation based on equation (2) can be carried out by switching the inputs to an adder by a selector, and by repeatedly using the same adder. The repetition number is n, and the switching of the inputs is carried out by a predetermined switching control signal.

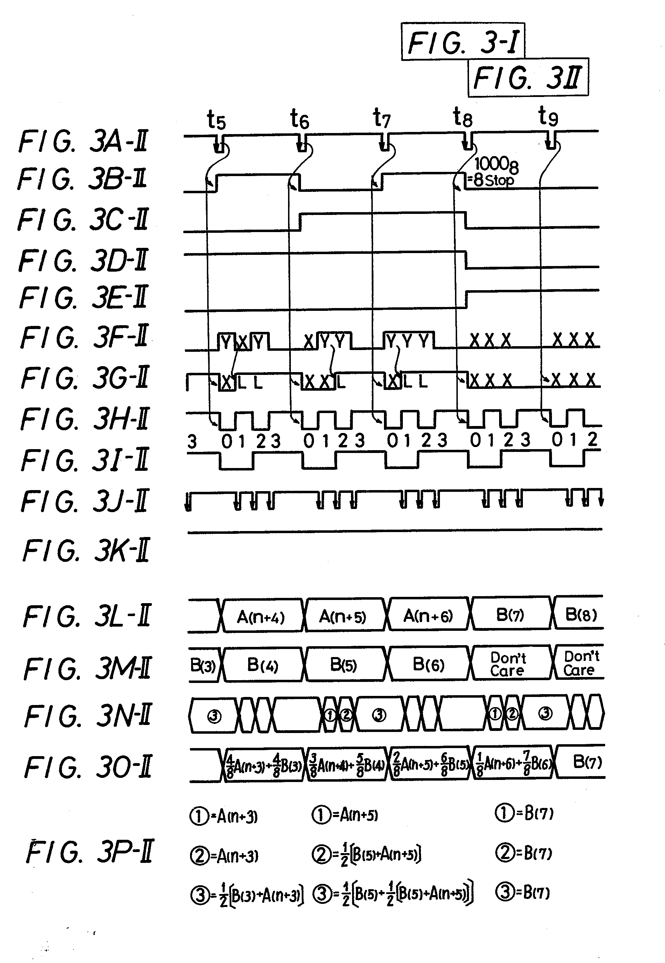

Now, an embodiment of digital signal composing circuit according to the present invention will be described in detail with reference to Figure 2 and Figures 3A to 3P (formed of Figures 3A-I and 3A-II to Figures 3P-I and 3P-II) for the case where two digital data are processed so as to be cross-faded over seven samples, by way of example.

The embodiment of Figure 2 has a data input terminal 1 to which two digital data X and Y are supplied sequentially or serially. The digital data X and Y from the input terminal 1 are supplied to and latched in latch circuits 4 and 5 at every sample in response to latch clock signals supplied from a timing circuit (not shown) through latch terminals 2 and 3 to the latch circuits 4 and 5. For example, each time the clock signal from the latch terminal 2 is supplied to the latch circuit 4, the digital data X in the digital data X and Y from the input terminal 1 is latched in the latch circuit 4, while each time the clock signal from the latch terminal 3 is supplied to the latch circuit 5, the digital data Y of the digital data X and Y from the input terminal 1 is latched in the latch circuit 5. Regarding the latch clock signals supplied to the latch circuits 5 and 4, the former preceeds the latter by one clock period. Of course, when the data X and Y supplied to the latch circuits 4 and 5 are supplied through respective independent data lines, it is possible for the clock signals from the latch terminals 2 and 3 to have the same timing.

The output signal from the latch circuit 5 is supplied to a selector 7, while the output signal from the latch circuit 4 is supplied to both of the selectors 6 and 7. The selector 6 is supplied with a feedback signal formed by the output signal from a latch circuit 9 provided at the output side of a half-adder 8 which adds the output signals from the selectors 6 and 7 to each other. As the latch clock signal for the latch circuit 9, there is used a clock signal which is supplied to a clock terminal 10. The selectors 6 and 7 are operated to switch the signals appearing at their input sides in response to the logic level of a switching control signal which will be described later. By way of example, the selector 7 supplies the output data Y of the latch circuit 5 when the level of the switching control signal to be supplied to its

control terminal $Y/\overline{X}$ is "1", while the selector 7 supplies the output data X of the latch circuit 4 when the level of the switching control signal is "0". On the other hand, the selector 6 supplies the output data L of the latch circuit 9 when the level of the switching control signal to be supplied to its control terminal $L/\overline{X}$ is "1", while the selector 6 supplies the output data X of the latch circuit 4 when the level of the switching control signal is "0".

A latch circuit 11 is provided at the output side of the latch circuit 9, and a clock signal the same as the clock signal supplied to the latch terminal 2 is used as the latch clock of the latch circuit 11. Connected to the output side of the latch circuit 11 is an output terminal 12.

As a control means for controlling the switching operation of the selectors 6 and 7, there is employed a circuit formed of, for example, a binary counter 13, a switching circuit 14 and a JK flip-flop circuit 15. The latch clock signal from the latch terminal 2 is supplied to a clear terminal CLR of the binary counter 13 as the clear signal at every sample, while the clock signal from the clock terminal 10 is supplied to a clock terminal CK thereof. The clock signal from the latch terminal 2 is supplied to a clear terminal CLR of the JK flip-flop circuit 15 as the clear signal, while the clock signal the same as that of the binary counter 13 is supplied to a clock terminal CK of the JK flip-flop circuit 15.

The switching circuit 14 is supplied at its input terminals $Q_1$ to $Q_n$ with switching information signals corresponding to the signal processing mode of the embodiment. If, for example, the cross-fade period is to have a duration of seven samples, the switching signal of at least three bits is supplied from a binary counter 16 to the input terminal Q ($Q_1$ to $Q_3$) of the switching circuit 14. This switching information signal is supplied to a control terminal a (1a to ma) of the switching circuit 14. The switching information signal is sequentially selected in response to the output signal from the binary counter 13 (where two bits to be supplied to the control terminals 1a and 2a are employed) and then supplied through the output terminal Qa to the control terminal $Y/\overline{X}$ of the selector 7 as the switching control signal. The clock signal the same as the clock signal from the latch terminal 2 is used as the clock signal of the binary counter 16, while a cross-fade start signal Sc (Figure 3K) generated when the cross-fade processing is started is used as the clear signal of the binary counter 16. The input terminal $Q_4$ of the switching circuit 14 corresponding to an output $2^3$ from

the binary counter 16 is fixed to either "1" or "0", for example, "0" in this embodiment.

The switching control signal from the switching circuit 14 is also supplied to an input terminal J of the JK flip-flop circuit 15. Since an output terminal Q of the JK flip-flop circuit 15 is at "0" level at the initial setting mode, the selector 6 is controlled so as to supply therefrom the output data X derived from the latch circuit 4 in response to the switching control signal. On the other hand, when the switching control signal from the switching circuit 14 is "1", namely, the level of the input signal at the input terminal J of the JK flip-flop circuit 15 is "1", if the clock signal is supplied from the clock terminal 10 to the clock terminal CK of the JK flip-flop circuit 15, the level of its output terminal Q becomes "1" so that at this time, the selector 6 is controlled by the switching control signal so as to supply therefrom the output data L of the latch circuit 9. The state where the level of the output terminal Q of the JK flip-flop circuit 15 is "1" is maintained until the clear signal supplied from the terminal 2 at each sample is supplied to the clear terminal CLK thereof.

The operation of the digital signal composing circuit shown in Figure 2 will now be described with reference to the signal waveforms shown in Figures 3A to 3P.

Two digital data X and Y respectively shown in Figures 3L and 3M are supplied through the input terminal 1 to the latch circuits 4 and 5, while to the clock terminals CK of the latch circuits 4 and 5 are respectively supplied from the latch terminals 2 and 3 the latch clock signals as shown in Figure 3A, which are delayed by one clock at each sample (the latch clock signal at the terminal 3 side is ahead of that at the terminal 2), and in response to these clock signals, first, the content of the digital data Y is latched in the latch circuit 5, and subsequently the content of the digital data X is latched in the latch circuit 4. The clear signal similar to the clock signal as shown in Figure 3A is supplied through the latch terminal 2 to the clear terminals CLR of the binary counter 13 and the JK flip-flop circuit 15, so that the binary counter 13 and the JK flip-flop circuit 15 are cleared at each sample.

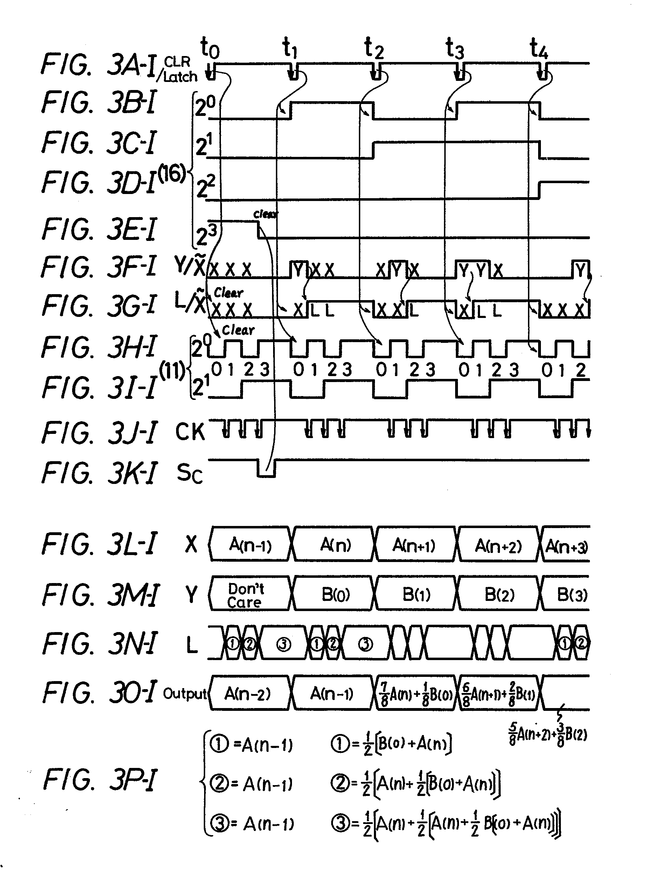

From the clock terminal 10, for example, three clock signals in one sample as shown in Figure 3J are supplied to the clock terminal CK of the binary counter 13 so that in synchronism with these clock signals two bit signals as shown in Figures 3H and 3I are supplied to the control terminals 1a and 2a of the switching circuit 14.

On the other hand, the switching circuit 14 is supplied at its input terminal Q with switching information signals of three bits as shown in Figures 3B to 3D from the binary counter 16. These switching information signals of three bits are selected by the output signal from the binary counter 13 and then supplied through the output terminal Qa of the switching circuit 14 to the control terminal $Y/\overline{X}$ of the selector 7 as a switching control signal as shown in Figure 3F. Namely, when the output (two bits) from the binary counter 13 is 0 (0 0) as shown in Figures 3H and 3I, of the switching information $(2^0, 2^1, 2^2)$ shown in Figures 3B to 3D supplied to the input terminals $Q_1$ to $Q_3$ of the switching circuit 14 from the binary counter 16, the information $2^0$ is supplied from the switching circuit 14, when 1 (1 0), the information $2^1$ is supplied from the switching circuit 14, and when 2 (0 1), the information $2^2$ is supplied from the switching circuit 14. As a result, the switching control signals of three bits $(2^0, 2^1, 2^2)$ in one sample are generated from the switching circuit 14. Namely, in one sample, the calculations are carried out three times (which means that n=3 in equation (1)). This switching control signal from the switching circuit 14 is also supplied to the input terminal J of the JK flip-flop circuit 15 so that in response to the supply of the clock signal from the clock terminal 10 to its clock terminal CK, which is the same as that supplied to the binary counter 13, the switching control signal is supplied through its output terminal Q to the selector 6 as the switching control signal as shown in Figure 3G.

Accordingly, during a period from time point $t_0$ to a time point $t_1$ as shown in Figure 3 in which the cross-fade period has not yet been reached, the switching information signal to be supplied to the switching circuit 14 is (0 0 0) as will be clear from Figures 3B to 3D. As a result, the switching control signal to be supplied to the selector 7 is also (0 0 0) as shown in Figure 3F so that during this period the selector 7 generates the data X latched in the latch circuit 4. Meanwhile, since the level of the output terminal Q of the JK flip-flop circuit 15 is normally "0" and the switching control signal to the selector 6 is (0 0 0) as shown in Figure 3G, the selector 6 also selects and supplies the data X latched in the latch circuit 4 during this period. The data X from the selectors 6 and 7 are added in the half-adder 8 and then latched in the latch circuit 9 as the data X. If, now, the contents of the data X and Y are respectively taken as those shown in Figures 3L and 3M, during this calculation period, the content $A(n-1)$ of the data X is latched in the latch circuit 9. Figures 3N and 3P respectively show the sequential orders of three calculations carried out during each sample period and the contents in the latch circuit 9 in correspondence therewith. During the period from time points $t_0$ to $t_1$, the content $A(n-1)$ of the data X is latched sequentially in the latch circuit 9 at each of the first ①, second ② and third ③ calculations, and then fed back to the other input side of the selector 6 at every calculation as the data L. Then, at time point $t_1$ when the clock signal from the latch terminal 2 is supplied to the latch circuit 11, the final result in the latch circuit 9 is latched in the latch circuit 11. Accordingly, at the output terminal 12 appears an output data $A(n-1)$ corresponding to the data X at that time as shown in Figure 3O. Namely, during this period, one digital data X are all supplied to the output terminal 12.

During the period from time points $t_0$ to $t_1$, the cross-fade start signal Sc as shown in Figure 3K is produced and supplied to the clear terminal CLR of the binary counter 16, and hence the content thereof is cleared as shown in Figure 3E. At time point $t_1$, similarly as above, in response to the latch signals as shown in Figure 3A from the latch terminals 2 and 3, the digital data X and Y from the input terminal 1 are respectively latched in the latch circuits 4 and 5 and the content of the binary counter 13 is cleared by the clock signal from the latch terminal 2 as shown in Figure 3H, and also the content of the JK flip-flop circuit 15 is cleared by the same clock signal.

During the period from time points $t_1$ to $t_2$, the switching information signal (1 0 0) is supplied to the input terminal Q of the switching circuit 14 as will be clear from Figures 3B to 3D. Then, in response thereto, from the output terminal Qa thereof, the switching control signal of (1 0 0) as shown in Figure 3F is supplied to the control terminal $Y/\overline{X}$ of the selector 7. The JK flip-flop circuit 15 is supplied at its input terminal J with the signal of "1" from the switching circuit 14 when the level of the output terminal Q of the JK flip-flop circuit 15 is "0" in the initial state as described above. After the level of the output terminal Q thereof is changed to "1" in response to the clock signal supplied from the clock terminal 10, this state is maintained until the succeeding clear signal is applied thereto. As a result, during the period from time points $t_1$ to $t_2$, the switching control signal (0 1 1) as shown in Figure 3C is supplied to the control terminal $L/\overline{X}$ of the selector 6.

Consequently, the calculation processing at that time is considered at every bit. At the least significant bit (LSB), the switching control signals supplied to the selectors 6 and 7 are respectively "0" and "1" as will be clear from Figures 3G and 3F, so that the selectors 6 and 7 respectively select and supply the data X and Y latched in the latch circuits 4 and 5. These data X and Y are added by the succeeding half-adder 8 so as to become the data $1/2(Y + X)$ and are then latched in the latch circuit 9. Namely, at that time, in the latch circuit 9 is latched the data of $1/2(B(0) + A(n))$ as will be clear from Figures 3N and 3P. At the more significant bit (or second order bit), the switching control signals supplied to the selectors 6 and 7 are respectively "1" and "0", so that at this time the selector 6 supplies the data $1/2(Y + X)$ latched in the latch circuit 9, while the selector 7, this time, supplies the data X latched in the latch circuit 4. These data $1/2(Y + X)$ and X are added together by the half adder 8 to become $1/2(X + 1/2(Y + X))$, and are then latched in the latch circuit 9. In other words, at this time, data $1/2(A(n) + 1/2(B(0) + A(n)))$ is latched in the latch circuit 9 as will be clear from Figures 3N and 3P. At the next more significant bit (or third order bit), similarly to the second order bit, the switching control signals supplied to the selectors 6 and 7 are respectively "1" and "0" so that the selector 6 supplies the data $1/2(X + 1/2(Y + X))$ latched in the latch circuit 9, while the selector 7 supplies the data X latched in the latch circuit 4. These data are added together by the half-adder 8 to become data $1/2(X + 1/2(X + 1/2(Y + X)))$, namely, data $7X/8 + Y/8$, and are then latched in the latch circuit 9. At this time, in the latch circuit 9 is latched data $1/2(A(n) + 1/2(A(n) + 1/2(B(0) + A(n))))$ as will be seen from Figures 3N and 3P. Accordingly, the final result of the latch circuit 9 at this time is latched in the latch circuit 11 by the next latch signal at time point $t_2$. Therefore, at this time, at the output terminal 12 appears data $7A(n)/8 + B(0)/8$ as shown in Figure 3O.

In this way, the calculation processing of one sample period during the period from time points $t_1$ to $t_2$ is carried out.

During the period from time points $t_2$ to $t_3$, the switching control

signals for the selectors 6 and 7 are respectively (0 0 1) and (0 1 0). Thus, when calculation processing the same as above has been carried out while sequentially switching the selectors 6 and 7, the calculated result during this sampling period is latched in the latch circuit 9 as the data of $6X/8 + 2Y/8$. As a result, at that time, the data of $6A(n+1)/8 + 2B(1)/8$ appears at the output terminal 12 as shown in Figure 3O.

Only the switching control signals for the selectors 6 and 7 during each sampling period and the data appearing at the output terminal 12 will be shown hereinafter. As will be clear from Figures 3F and 3G and Figure 3O, these are during the period from time points $t_3$ to $t_4$, (0 1 1), (1 1 0) and $5A(n+2)/8 + 3B(2)/8$, during the period from time points $t_4$ to $t_5$, (0 0 0), (0 0 1) and $4A(n+3)/8 + 4B(3)/8$, during the period from time points $t_5$ to $t_6$, (0 1 1), (1 0 1) and $3A(n+4)/8 + 5B(4)/8$, during the period from time points $t_6$ to $t_7$, (0 0 1), (0 1 1) and $2A(n+5)/8 + 6B(5)/8$, and during the period from time points $t_7$ to $t_8$ which is the final sampling period immediately before the last data X is switched to the data Y, (0 1 1), (1 1 1) and $1A(n+6)/8 + 7B(6)/8$. The content of the data latched in the latch circuit 9 at every calculation step during each sampling period will be considered especially with reference to the period from time points $t_4$ to $t_5$ and the period from time points $t_6$ to $t_7$. As will be understood from Figures 3L and 3P, during the former period, ① = $A(n+3)$, ② = $A(n+3)$ and ③ = $1/2(B(3) + A(n+3))$, while during the latter period, ① = $A(n+5)$, ② = $1/2(b(5) + A(n+5))$ and ③ = $1/2(B(5) + 1/2(B(5) + A(n+5)))$.

At time point $t_8$ when the cross-fade period is ended, the switching information signal supplied to the input terminal Q of the switching circuit 14 becomes (0 0 0) as shown in Figures 3B to 3D, so that the switching control signal to the selector 7 becomes (0 0 0) as shown in Figure 3F. In association therewith, the switching control signal to the selector 6 also becomes (0 0 0) as shown in Figure 3G with the result that both the selectors 6 and 7 supply the data latched in the latch circuit 4. After the interpolation processing of data is ended, the latch circuit 4 is operated in such a manner that of the two digital data A and B supplied thereto from the input terminal 1, the digital data B is latched as the data X. Accordingly, after the time point $t_8$, the data X is supplied through the selectors 6 and 7 to the half-adder 8, added together therein and then latched in the latched circuit 9 as the data X. The content of the data X latched in the latch circuit 9 during the period from the time points $t_8$ to $t_9$ is presented all as B(7) through three calculations as will be seen from Figures 3L and 3P. This final result is latched in the latch circuit 11 in response to the next clock signal so that at the output terminal 12 appears the output data B(7) as shown in Figure 3O.

As described above, the digital data having different contents can be connected smoothly.

While the above embodiment is applied to the case of cross-fade signal processing, the present invention is not limited to the above application, but can be applied to other examples such as a digital volume, digital mixing, digital fade-in/fade-out processing or digital linear interpolation processing. Thus, in the case of the digital volume processing, the amplitude of the signal can be adjusted to be as high as $K/2^n$ times. In that case, if the data X is selected to be zero, the signal sample is set in the data Y, the information regarding K is set in the input terminal Q of the switching circuit 14, and after the binary counter 13 is cleared the clock signal is applied n times, and at the output terminal 12 is derived the signal data which is multiplied by $K/2^n$. The above operation is repeated for each signal sample. In the case of the digital mixing processing, if one more signal sample is added to the data X which is set to zero in the digital volume, the data X and Y can be mixed with each other with the ratio of $(1 - K/2^n) : K/2^n$. Moreover, in the case of digital fade-in/fade-out processing, the switching information is set in the input terminal Q of the switching circuit 14 and although in the cross-fade operation, the signal samples are set in both the data X and Y, in this case, the signal sample is set in only the data Y and the data X is made zero. Thus, the fade-in signal processing is achieved. Moreover, in the case of the digital/linear interpolation, if the values at both ends of the interpolation interval are set in the data X and Y, respectively, and the switching information supplied to the input terminal Q of the switching circuit 14 is sequentially selected by the binary counter 13, it is possible to obtain a value which is provided by linearly interpolating the data X and Y.

As described above, in signal processing such as connecting a plurality of digital data X and Y, the weighted mean value $Z + (K/2^n)X + (1-K/2^n)Y$ is obtained. At that time, the weighted coefficient is taken as $K/2^n$ and the addition of data can be performed by multiplication by 1/2. Therefore, a multiplier is not required. As a result, the circuitry can be made simple in construction and inexpensive to manufacture, particularly when the digital signal composing circuit is formed as an integrated circuit.

## CLAIMS

1. A digital signal composing circuit characterised by:

a first selecting circuit (7) for selecting a plurality of digital data;

a second selecting circuit (6) for selecting one of said digital data and a feedback signal;

a control circuit (14) for controlling the switching of said first and second selecting circuits (7, 6); and

an adder (8) for adding outputs of said first and second selecting circuits (6) and supplying said added output to said second selecting circuit (6) as said feedback signal, whereby a final output is derived from said adder (8).

2. A digital signal composing circuit according to claim 1 wherein the calculation of two digital input signals X and Y is expressed by the following equation:

$$Z = (K(2^n)X + (1-K/2^n)Y$$

where K is a constant and n an arbitrary integer.

FIG. 2

FIG. 1

FIG. 3A-I $\frac{CLR}{Latch}$

FIG. 3B-I $2^0$

FIG. 3C-I $2^1$

FIG. 3D-I(16) $2^2$

FIG. 3E-I $2^3$

FIG. 3F-I Y/X̃

FIG. 3G-I L/X̃

FIG. 3H-I $2^0$

FIG. 3I-I(11) $2^1$

FIG. 3J-I CK

FIG. 3K-I Sc

FIG. 3L-I X : A(n-1), A(n), A(n+1), A(n+2), A(n+3)

FIG. 3M-I Y : Don't Care, B(0), B(1), B(2), B(3)

FIG. 3N-I L

FIG. 30-I Output : A(n-2), A(n-1), $\frac{7}{8}A(n)+\frac{1}{8}B(0)$, $\frac{6}{8}A(n+1)+\frac{2}{8}B(1)$, $\frac{5}{8}A(n+2)+\frac{3}{8}B(2)$

FIG. 3P-I
$$\begin{cases} ① = A(n-1) & ① = \frac{1}{2}\left[B(0)+A(n)\right] \\ ② = A(n-1) & ② = \frac{1}{2}\left[A(n)+\frac{1}{2}\left[B(0)+A(n)\right]\right] \\ ③ = A(n-1) & ③ = \frac{1}{2}\left[A(n)+\frac{1}{2}\left[A(n)+\frac{1}{2}B(0)+A(n)\right]\right] \end{cases}$$

FIG. 3-I

FIG. 3Ⅱ

| | $t_5$ | $t_6$ | $t_7$ | $t_8$ | $t_9$ |

FIG. 3A-Ⅱ

FIG. 3B-Ⅱ      $1000_8$ =8 Stop

FIG. 3C-Ⅱ

FIG. 3D-Ⅱ

FIG. 3E-Ⅱ

FIG. 3F-Ⅱ   Y X Y    X Y Y    Y Y Y    X X X    X X X

FIG. 3G-Ⅱ   X X L L   X X L   X L L   X X X   X X X

FIG. 3H-Ⅱ

FIG. 3I-Ⅱ   3  0 1 2 3   0 1 2 3   0 1 2 3   0 1 2 3   0 1 2

FIG. 3J-Ⅱ

FIG. 3K-Ⅱ

FIG. 3L-Ⅱ   | A(n+4) | A(n+5) | A(n+6) | B(7) | B(8) |

FIG. 3M-Ⅱ   B(3) | B(4) | B(5) | B(6) | Don't Care | Don't Care |

FIG. 3N-Ⅱ   ③     ① ② ③     ① ② ③

FIG. 3O-Ⅱ   $\frac{4}{8}A(n+3)+\frac{4}{8}B(3)$ | $\frac{3}{8}A(n+4)+\frac{5}{8}B(4)$ | $\frac{2}{8}A(n+5)+\frac{6}{8}B(5)$ | $\frac{1}{8}A(n+6)+\frac{7}{8}B(6)$ | B(7)

FIG. 3P-Ⅱ

① = A(n+3)     ① = A(n+5)          ① = B(7)

② = A(n+3)     ② = $\frac{1}{2}[B(5)+A(n+5)]$     ② = B(7)

③ = $\frac{1}{2}[B(3)+A(n+3)]$   ③ = $\frac{1}{2}[B(5)+\frac{1}{2}[B(5)+A(n+5)]]$   ③ = B(7)